Europäisches Patentamt

European Patent Office

Office européen des brevets

(19)

(11) Veröffentlichungsnummer: **0 269 554**
**A2**

(12) **EUROPÄISCHE PATENTANMELDUNG**

(21) Anmeldenummer: **87730136.6**

(22) Anmeldetag: **28.10.87**

(51) Int. Cl.⁴: **H 04 M 1/66**

(30) Priorität: **28.11.86 DE 3640707**

(43) Veröffentlichungstag der Anmeldung:
**01.06.88 Patentblatt 88/22**

(84) Benannte Vertragsstaaten:
**AT BE CH DE ES FR GB GR IT LI LU NL SE**

(71) Anmelder: **FRITZ KUKE KG**
**Am Juliusturm 67-73**
**D-1000 Berlin 20 (DE)**

(72) Erfinder: **Düning, Rüdiger Walter Erich**
**Maulbeerallee 22**
**D-1000 Berlin 20 (DE)**

**Müller, Norbert Harry**
**Havelstrasse 18**
**D-1000 Berlin 20 (DE)**

(74) Vertreter: **Pfenning, Meinig & Partner**
**Kurfürstendamm 170**
**D-1000 Berlin 15 (DE)**

(54) **Schaltungsanordnung mit einer Wählsperre.**

(57) Es wird eine Schaltungsanordnung mit einer Wählsperre zur Sperrung von von einer Endeinrichtung abgehenden Fernmeldeverbindungen vorgeschlagen, bei der im Sperrzustand abhängig von einem bei Abheben des Handapparates der Endeinrichtung fließenden kleinen, zur Erzeugung einer Wahl nicht ausreichenden Steuerstrom eine Schleife zwischen die Amtsleitungen eingeschleift wird, über die ein Belegungsstrom fließt. Weiterhin ist eine Abtastschaltung vorgesehen, die bei ankommendem Ruf die Rufwechselspannung abtastet, wobei abhängig von der Rufwechselspannung die Schleife getrennt und die Endeinrichtung an die Amtsleitungen geschaltet wird.

EP 0 269 554 A2

**Beschreibung**

Schaltungsanordnung mit einer Wählsperre

Die Erfindung betrifft eine Schaltungsanordnung mit einer Wählsperre zur Sperrung von von einer Endeinrichtung abgehenden Fernmeldeverbindungen.

Eine derartige Schaltungsanordnung, die beispielsweise in der DE-PS 35 02 947 beschrieben ist, bewirkt, daß andere Endeinrichtungen nicht angewählt, ankommende Rufe aber empfangen werden können. Bei der bekannten Schaltungsanordnung ist in einer Ader der Amtsleitung ein Relais einschaltbar, über dessen selbsthaltenden Kontakt beim Abnehmen des Handapparates und Umschalten des Gabelumschalters die beiden Adern der Amtsleitung zur Verhinderung des Aussendens einer Wählimpulsfolge miteinander verbindbar sind. In Reihe mit dem Kontakt des Relais ist eine Diodenschaltung mit einer die Spannung zwischen den beiden Adern übersteigenden Durchbruchspannung geschaltet, wodurch das Führen eines Gespräches bei einer von außen hergestellten Verbindung möglich ist. Eine derartige Schaltungsanordnung verhindert bei einem Impulswahlverfahren eine Wahl nach außen, bei dem Mehrfrequenzwahlverfahren ist sie aber nicht anwendbar.

Hier setzt die vorliegende Erfindung ein, der die Aufgabe zugrunde liegt, eine Schaltungsanordnung mit einer Wählsperre zu schaffen, die sowohl bei dem Impulswahlverfahren als auch bei dem Mehrfrequenzwahlverfahren anwendbar ist.

Diese Aufgabe wird erfindungsgemäß durch die kennzeichnenden Merkmale des Hauptanspruchs gelöst.

Erfindungsgemäß ist die Schaltungsanordnung mit einer Wählsperre derart ausgebildet, daß im Sperrzustand abhängig von einem bei Abheben des Handapparates der Endeinrichtung fließenden kleinen, für die Erzeugung einer Wahl nicht ausreichenden Steuerstrom eine Schleife zwischen den Amtsleitungen eingeschleift wird, über die eine Belegungsstrom fließt und daß bei ankommendem Ruf die Rufwechselspannung abgetastet und abhängig von der Rufwechselspannung die Schleife getrennt und die Endeinrichtung an die Amtsleitungen geschaltet wird. Diese Schaltungsanordnung verhindert die Wahl für den Aufbau einer von der Endeinrichtung abgehenden Verbindung sowohl bei Anwendung des Impuls-als auch des Mehrfrequenzwahlverfahrens, wobei gleichzeitig die ankommenden Rufe empfangen werden können.

Durch die in den Unteransprüchen angegebenen Maßnahmen sind vorteilhafte Weiterbildungen, und Verbesserungen möglich. Besonders vorteilhalt ist, daß die einzuschleifende Schleife antiparallel geschaltete elektronische Schalter aufweist, so daß die amtsleitungen vertauschbar sind und somit eine Verpolung nicht mehr möglich ist.

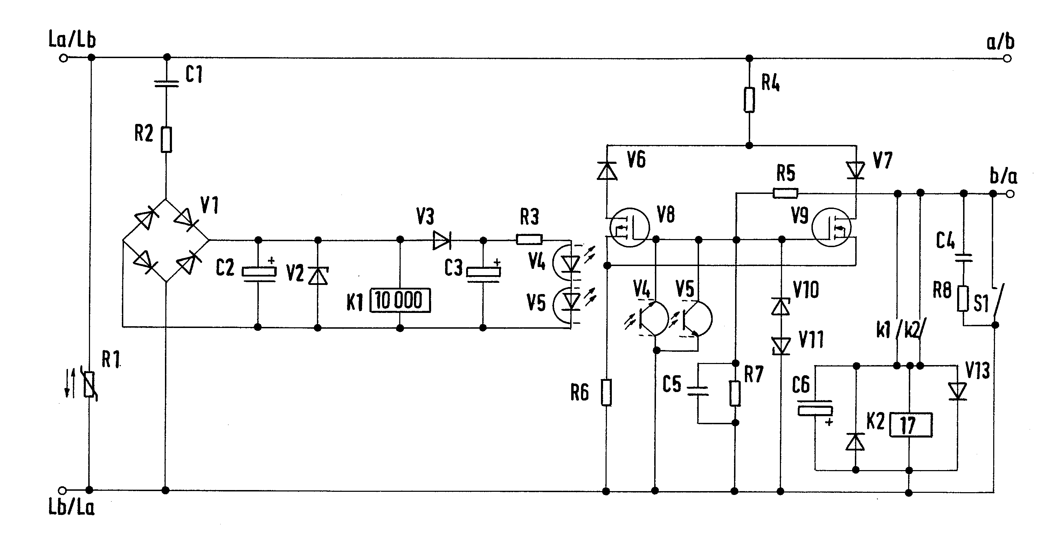

Ein Ausführungsbeispiel der Erfindung ist in der Zeichnung dargestellt und wird in der nachfolgenden Beschreibung näher erläutert. Die einzige Figur zeigt die schaltungsgemäße Ausgestaltung eines Ausführungsbeispiels der Erfindung.

Die Schaltungsanordnung nach der Figur ist üblicherweise als getrennte Einheit ausgebildet und wird an den Klemmen La, Lb and die Amtsleitungen und mit den Klemmen a,b an die Endeinrichtung, beispielsweise an einen Fernsprechapparat angeschlossen. In der Figur sind die Klemmen mit La/Lb bzw. Lb/La und a/b bzw. b/a bezeichnet. Dies bedeutet, daß die Anschlüsse vertauscht werden können und keine Verpolung auftritt. Für das Einschalten der Wählsperre ist ein Schlüsselschalter vorgesehen, der mit S1 bezeichnet ist. wobei die Wählsperre eingeschaltet ist, wenn der Schalter S1 offen ist. Somit ist die direkte Verbindung zwischen der Amtsleitung Lb und dem Anschluß b der Endeinrichtung getrennt. Der Schalter S1 ist mit einem RC-Glied R8, C4 überbrückt, das eine gleichstrommäßige Entkopplung des Anschlusses von der Amtsleitung bewirkt, das heißt, der als Endeinrichtung ausgebildete Fernsprechapparat ist bie offenem Schalter S1 gleichstrommäßig abgetrennt, wobei die Rufwechselspannung von 425 Hz durchschaltbar ist.

Wird bei nichtankommendem Ruf der Handapparat des Fernsprechapparates abgehoben und der Gabelumschalter umgeschaltet, so wird der Fernsprechapparat wegen der gleichstrommäßigen Entkopplung durch den Kondensator C4 nicht versorgt, es fließt aber über die Widerstände R5 und R7 ein kleiner Steuerstrom, wobei die Widerstände R5 und R7 so bemessen sind, daß der Steuerstrom für die Erzeugung einer Wahl nicht ausreicht. Der Verbindungspunkt zwischen den Widerständen R5 und R7 ist mit den Steuerelektroden zweier als Feldeffekttransistoren V8, V9 verbunden, wobei der Fet V8 ein P-Kanal Fet V9 ein N-Kanal Fet ist. Die Drain-Anschlüsse der Fets V8, V9 sind über entsprechende Dioden V6, V7 und den Widerstand R4 an die Amtsleitung La angeschlossen, während die Source-Anschlüsse über den Widerstand R6 mit der Amtsleitung Lb verbunden sind. Bei Fließen des Steuerstromes über die Amtsleitung Lb, die Widerstände R7, R5, den Fernsprechapparat bei abgehobenem Handapparat zu La ändert sich das Steuerpotential an den Gate-Anschlüssen der Fets, so daß je nach Polung der Amtsleitungen La, Lb einer von beiden durchschaltet und über die durch R4, V6, V8 oder V7, V9 und R6 gebildete Schleife 1 ein großer Strom fließt, der dem Amt die Belegung des Fernsprechapparates signalisiert. Der Wählton gelangt weiterhin über das RC-Glied R8, C4 an den Fernsprechapparat und kann bei vorhandener passiver Sprechschaltung mit Transformator dort gehört werden.

Ankommende Rufe werden dem Fernsprechapparat signalisiert, da die Wechselstromverbindung über das RC-Glied R8, C4 gegeben ist. Die Rufwechselspannung wird außerdem von einer Abtastschaltung 2 abgetastet, die parallel zu den ankommenden Amtsleitungen geschaltet ist. Zwischen den Amtsleitungen La, Lb leigt eine Reihenschaltung aus dem Kondensator C1, dem Widerstand R2 und einer Diodenbrücke V1. Parallel zu den weiteren Brückenzweigen liegt ein Glättungskondensator C2, ein Relais K1, ein als Energiespeicher dienender kondensator C3 und die Sendedioden zweier Optokoppler V4, V5. Die Dioden V2 und V3 dienen als Schutzdioden. Die ankommende Rufwechselspannung wird über die Brücke V1 gleichgerichtet und über den Kondensator C2 geglättet. Das Relais K1 wird erregt und gleichzeitig senden die Sendedioden der Optokoppler V4, V5 eine Strahlung aus. Bei Erregung des Relais K1 wird der zugehörige Kontakt k1 geschaltet. Gleichzeitig schaltet einer der Fototransistoren des Optokopplers V4, V5 die Gate-Anschlüsse der Fets V8, V9 auf das Potential der Amtsleitung Lb, so daß der leitende Fet V8 oder V9 sperrt und die Verbindung zwischen den Amtsleitungen La, Lb unterbrochen wird.

Wenn der Kontakt k1 geschlossen ist, lädt sich der Speicherkondensator C6 auf und das Relais K2 wird erregt, so daß der zugehörige Kontakt k2 schaltet. Bei Abheben des Handapparates wird somit der Fernsprechapparat versorgt und die Verbindung wird über die Selbsthalteschaltung, bestehend aus dem Relais K2 und dem zugehörigen Kontakt k2, aufrechterhalten. Nach Beendigung des Gespräches und Auflegen des Handapparates bleibt das Relais K2 noch solange erregt, bis sich der Kondensator C6 entladen hat und dann fällt auch der Kontakt k2 wieder ab.

Die Dioden V10, V11, V12, V13 dienen als Schutzdioden und der Varistor R1 als Schutz gegen Überspannung.

In dem Ausführungsbeispiel ist als Steuereinheit für den Kontakt k1 ein Relais K1 verwendet. Für den gesteuerten Schalter kann aber beispielsweise auch ein Optokoppler benutzt werden.

Befindet sich der Schlüsselschalter in der Normalstellung, dann ist der Schalter S1 geschlossen und die Wählsperre ist unwirksam, da die Amtsleitungen La und Lb auf die Anschlüsse a und b des Fernsprechapparates durchgeschaltet sind.


## Patentansprüche

1. Schaltungsanordnung mit einer Wählsperre zur Sperrung von von einer Endeinrichtung abgehenden Fernmeldeverbindungen,
**dadurch gekennzeichnet,**
daß im Sperrzustand abhängig von einem bei Abheben des Handapparates der Endeinrichtung fließenden kleinen, zur Erzeugung einer Wahl nicht ausreichenden Steuerstrom eine Schleife (1) zwischen den Amtsleitungen (La, Lb) eingeschleift wird, über die ein Belegungsstrom fließt und daß eine Abtastschaltung (2) vorgesehen ist, die bei ankommendem Ruf die Rufwechselspannung abtastet, wobei abhängig von der Rufwechselspannung die Schleife (1) getrennt und die Endeinrichtung an die Amtsleitungen (La,Lb) geschaltet wird.

2. Schaltungsanordnung nach Anspruch 1, dadurch gekennzeichnet, daß in die eine Amtsleitung (Lb) ein Schlüsselschalter (S1) geschaltet ist der bei Sperrung geöffnet ist.

3. Schaltungsanordnung nach Anspruch 1 oder 2, dadurch gekennzeichnet, daß die Schleife (1) mindestens einen elektronischen Schalter (V8,V9) aufweist, der bei Ansteuerung durch den kleinen Steuerstrom leitend wird.

4. Schaltungsanordnung nach einem der Ansprüche 1 bis 3, dadurch gekennzeichnet, daß zur Erzeugung des kleinen Steuerstroms zwischen einer Amtsleitung (Lb) und des entsprechenden Anschlusses (b) in der Endeinrichtung unter Überbrückung des Schlüsselschalters (S1) mindestens ein Widerstand (R5,R7) geschaltet ist.

5. Schaltungsanordnung nach Anspruch 4, dadurch gekennzeichnet, daß der mindestens eine Widerstand (R5,R7) mit der Steuerelektrode des elektronischen Schalters (V8,V9) verbunden ist.

6. Schaltungsanordnung nach einem der Ansprüche 1 bis 5, dadurch gekennzeichnet, daß die Abtastschaltung (2) eine erste Steuereinheit (V4,V5) aufweist, die einen die Schleife (1) trennenden ersten Schalten (V4,V5) ansteuert.

7. Schaltungsanordnung nach Anspruch 5 und 6, dadurch gekennzeichnet, daß der erste Schalter (V4,V5) die Steuerelektrode des elektronischen Schalters (V8,V9) mit der Amtsleitung (Lb) verbindet.

8. Schaltungsanordnung nach Anspruch 6 oder 7, dadurch gekennzeichnet, daß die erste Steuereinheit und der zugehörige Schalter als Optokoppler (V4,V5) ausgebildet sind.

9. Schaltungsanordnung einem der Ansprüche 1 bis 8, dadurch gekennzeichnet, daß die Abtastschaltung (2) eine zweite Steuereinheit (K1) aufweist, die einen den Schlüsselschalter (S1) überbrückenden zweiten Schalter (k1) ansteuert.

10. Schaltungsanordnung nach Anspruch 9, dadurch gekennzeichnet, daß in Reihe zu dem zweiten Schalter (k1) eine dritte Steuereinheit (K2) liegt, die einen parallel zum zweiten Schalter (k1) angeordneten dritten Schalter (k2) ansteuert.

11. Schaltungsanordnung nach Anspruch 9 oder 10, dadurch gekennzeichnet, daß die zweite und/oder dritte Steuereinheit (K1,K2) als Relais ausgebildet sind.

12. Schaltungsanordnung nach einem der Ansprüche 1 bis 11, dadurch gekennzeichnet, daß parallel zum Schlüsselschalter (S1) ein RC-Glied (R8,C4) zur gleichstrommäßigen Entkopplung der Amtsleitung (Lb) vom Anschluß (b) der Endeinrichtung vorgesehen ist.

13. Schaltungsanordnung nach einem der Ansprüche 1 bis 12, dadurch gekennzeichnet, daß zur Verhinderung der Polung die Schleife (1) zwei antiparallel geschaltete elektronische Schalter (V8,V9) aufweist.

14. Schaltungsanordnung nach Anspruch 8 und 13, dadurch gekennzeichnet, daß die erste Steuereinheit mit entsprechendem Schalter zwei Optokoppler (V4,V5) aufweist.

15. Schaltungsanordnung nach einem der Amsprüche 1 bis 14, dadurch gekennzeichnet, daß die Abtastschaltung (2) eine Brückenschaltung (V1) aufweist, deren zwei Brückenzweige parallel zu den Amtsleitungen (La,Lb) geschaltet sind und zu deren weiteren Brückenzweigen die Steuereinheiten (K1,V4,V5) parallel liegen

0269554